# EUROPEAN PATENT APPLICATION

(11) **EP 4 556 639 A1**
(43) Date of publication of application: **21.05.2025**
(21) Application number: 23871424.0
(22) Date of filing: 27.07.2023
(51) Int. Cl.: E02F 9/00, E02F 9/16, B60H 1/00

(54) **CONSTRUCTION MACHINE**

(30) Priority: 29.09.2022 JP 2022156434
(71) Applicant: Hitachi Construction Machinery Tierra Co., Ltd., Shiga 528-0061, (JP)
(72) Inventor: TSUKAGUCHI, Akito, Koka-shi, Shiga 528-0061 (JP); YAMAMOTO, Daisuke, Koka-shi, Shiga 528-0061 (JP)
(74) Representative: Manitz Finsterwald Patent- und Rechtsanwaltspartnerschaft mbB
(86) International application number: PCT/JP2023/027557
(87) International publication number: WO 2024/070181

(57) **Abstract**

A hydraulic excavator (1) includes a cooling fan (8A), a heat exchanger (21) to which cooling air from the cooling fan (8A) is supplied, an air conditioner unit (24) provided inside a cab (10), and an outside air introducing duct (25) for introducing outside air to the air conditioner unit (24). An outside air inlet port (25B) of the outside air introducing duct (25) opens toward the upstream side of the flow of the cooling air inside a heat exchanger chamber (23) into which the cooling air to be supplied to the heat exchanger (21) flows.

## Description

### TECHNICAL FIELD

The present invention relates to construction machines such as hydraulic excavators, particularly a construction machine provided with an air conditioner unit.

### BACKGROUND ART

A hydraulic excavator as a representative example of a construction machine is provided with a vehicle body configured by an automotive lower traveling structure and an upper revolving structure mounted on the lower traveling structure to be capable of revolving thereto. A working mechanism is provided on the front side of the upper revolving structure and an excavating work of earth and sand, or the like is performed using the working mechanism.

The upper revolving structure in the hydraulic excavator is provided with a revolving frame serving as a support structure. The revolving frame is provided with a cab the inside of which serves as an operator's room, a prime mover such as an engine, a hydraulic pump, a cooling fan, a heat exchanger and the like, which are mounted thereon. The heat exchanger includes a radiator and an oil cooler, for example, and cools heated fluid (coolant) of engine cooling water, operating oil and the like by supply of cooling air from the cooling fan to the heat exchanger. There are some cases where the hydraulic excavator performs an excavating work in a state where the vehicle body stays in a prescribed position. Therefore, the hydraulic excavator needs to regularly take in outside air by the cooling fan and generate cooling air during the operating of the engine.

In addition, an air conditioner unit is provided in the upper revolving structure in the hydraulic excavator to supply conditioned air to the operator's room in the cab, and the air conditioner unit takes in outside air through a duct to perform heating, cooling and the like of the operator's room. A dust protective filter is usually attached to an outside air inlet port of the duct and the powder dust mixed into the outside air is eliminated by the dust protective filter (Patent Document 1). The hydraulic excavator according to Patent Document 1 is configured so that the duct is provided inside the cab and the outside air introducing port of the duct is communicated with an equipment accommodating room through an outside air introducing passage. Because of this configuration, the outside air is introduced from the equipment accommodating room through the outside air introducing passage and the duct into the air conditioner unit and the powder dust mixed into the outside air is trapped by the dust protective filter attached to the outside air introducing port of the duct.

On the other hand, there is known a compact (backward small revolving type) hydraulic excavator to be used in a narrow working site of a city street or the like. In this compact hydraulic excavator, a revolving radius of a rear end part of the upper revolving structure is set to be as small as possible by locating the prime mover to be close to the revolving center (Patent Document 2). Therefore, in the compact hydraulic excavator according to Patent Document 2, an air conditioner unit is located in a narrow space formed on the lower side of the cab. An outside air introducing port of a duct for introducing outside air into the air conditioner unit opens into a space in which a heat exchanger is accommodated.

### PRIOR ART DOCUMENT

### PATENT DOCUMENT

Patent Document 1: Japanese Patent Laid-Open No. 2016-138404 A
Patent Document 2: Japanese Patent Laid-Open No. 2012-67484 A

### SUMMARY OF THE INVENTION

However, in the air conditioner unit according to Patent Document 1 the inlet port of the outside air introducing passage for taking the outside air within the equipment accommodating room in the air conditioner unit opens into the equipment accommodating room in a position away from the cooling fan. Therefore, it is difficult to efficiently supply the outside air to the air conditioner unit by using the cooling air flowing into the equipment accommodating room by the cooling fan. On the other hand, in the air conditioner unit according to Patent Document 2 the outside air introducing port of the duct opens in a direction perpendicular to the flow of the cooling air to be supplied to the radiator. Therefore, the introduction of the outside air to the outside air introducing port is interrupted by the flow of the cooling air, possibly making it difficult to supply the outside air to the air conditioner unit efficiently.

An object of the present invention is to provide a construction machine that can supply outside air to an air conditioner unit efficiently.

An aspect of the present invention is provided with a construction machine comprising: a cooling fan that generates cooling air; a heat exchanger that cools fluid by the cooling air supplied from the cooling fan; an exterior cover that covers the cooling fan and the heat exchanger to form a heat exchanger chamber and is provided with a vent through which the cooling air is communicated with a vehicle body outside; a cab that forms an operator's room; an air conditioner unit that supplies conditioned air into the cab; and a duct that is provided with an outside air inlet port and introduces outside air taken in from the outside air inlet port to the air conditioner unit, characterized in that: the outside air inlet port is provided within the heat exchanger chamber and is located to open toward an upstream side of the flow of the cooling air.

According to the aspect of the present invention, when the cooling air to be supplied to the heat exchanger flows into the heat exchanger chamber, part of the cooling air is introduced to the outside air inlet port of the duct, thereby making it possible to introduce the outside air to the air conditioner unit efficiently.

### BRIEF DESCRIPTION OF THE DRAWINGS

Fig. 1 is a right side view showing a hydraulic excavator according to an embodiment of the present invention.
Fig. 2 is a back view showing the hydraulic excavator, as viewed from backward.
Fig. 3 is a perspective view showing an upper revolving structure in a state where a right rear side cover is removed, as viewed from right backward.
Fig. 4 is a right side view showing the upper revolving structure in a state where the right rear side cover is removed, as viewed from right lateral.
Fig. 5 is a plan view showing the upper revolving structure in a state where a right front upper cover and a right rear upper cover are removed, as viewed from above.
Fig. 6 is a back view showing the upper revolving structure in a state where a counterweight is removed, as viewed from backward.

### MODE FOR CARRYING OUT THE INVENTION

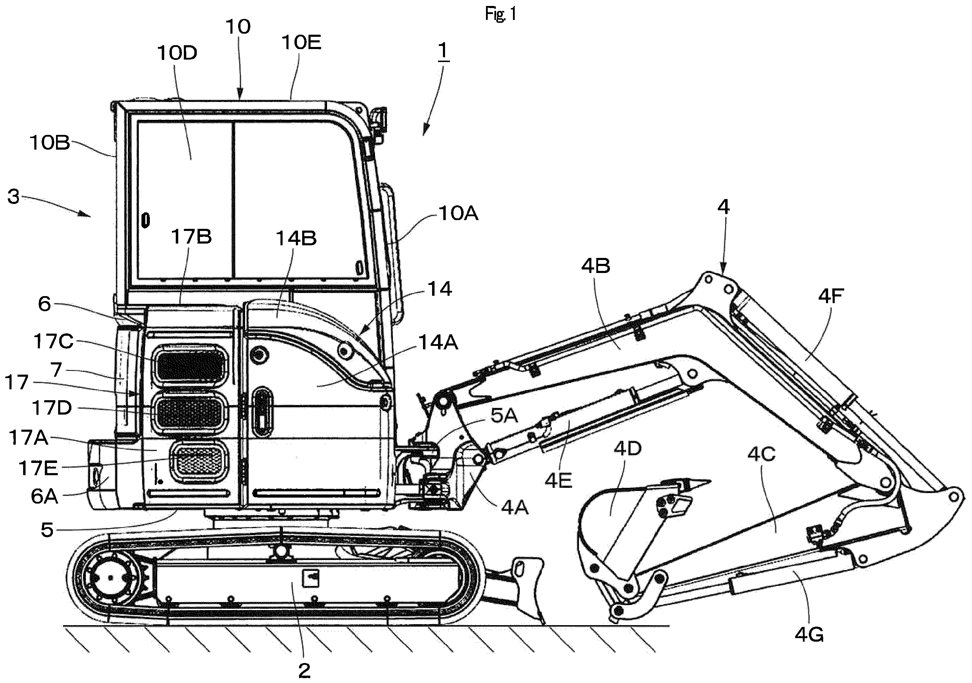

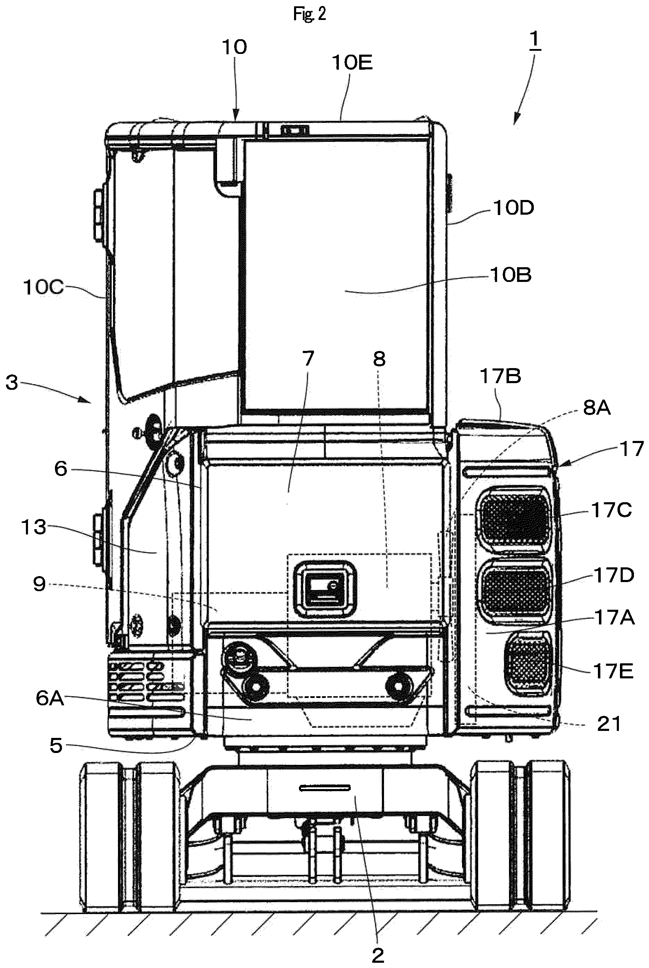

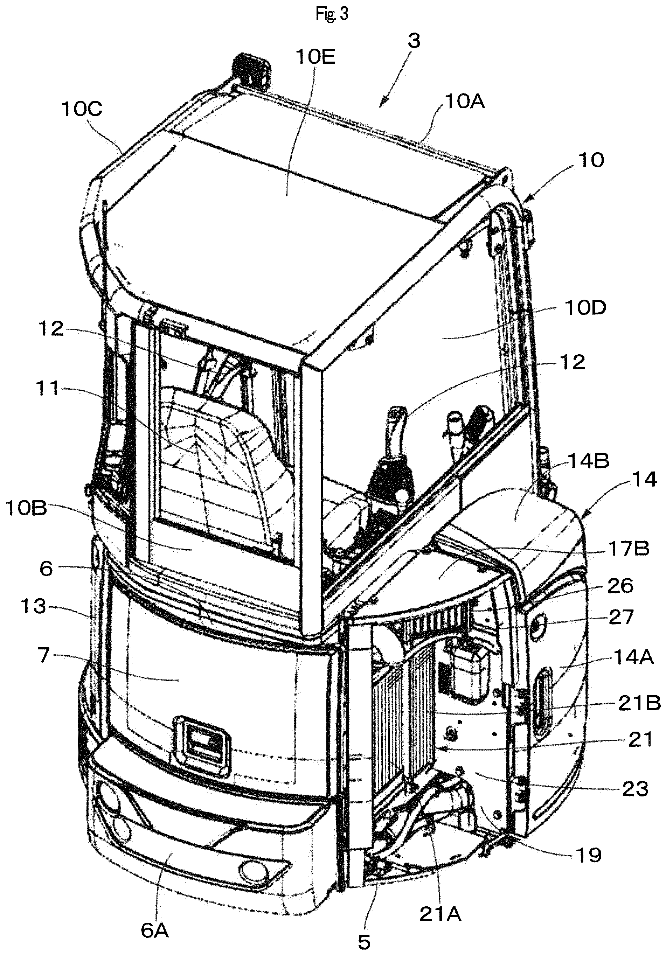

Hereinafter, a construction machine according to an embodiment of the present invention will be explained in detail referring to Fig. 1 to Fig. 6 by taking a backward small revolving type of a hydraulic excavator as an example.

A hydraulic excavator 1 as a representative example of a construction machine is provided with an automotive lower traveling structure 2 of a crawler type and an upper revolving structure 3 mounted on the lower traveling structure 2 to be capable of revolving thereto. A swing type working mechanism 4 is provided on the front side of the upper revolving structure 3 to perform an excavating work of earth and sand, or the like.

The working mechanism 4 includes a swing post 4A attached to the front side of an after-mentioned revolving frame 5 to be capable of swinging in the left-right direction, a boom 4B attached to the swing post 4A to be rotatable thereto, an arm 4C attached to a tip end of the boom 4B to be rotatable thereto, a bucket 4D attached to a tip end of the arm 4C to be rotatable thereto, a boom cylinder 4E, an arm cylinder 4F, and a bucket cylinder 4G. In addition, a swing cylinder is provided between the revolving frame 5 and the swing post 4A to swing the swing post 4A in the left-right direction.

The upper revolving structure 3 includes the revolving frame 5, a counterweight 6, an engine 8, a hydraulic pump 9, a cab 10, a left exterior cover 13, a right front exterior cover 14, a right rear exterior cover 17 and the like.

The revolving frame 5 serves as a base of the upper revolving structure 3 and is mounted via a revolving device on the lower traveling structure 2 to be capable of revolving thereto. A support bracket 5A is provided on the front side of the revolving frame 5 to project forward and the swing post 4A in the working mechanism 4 is supported on the support bracket 5A to be capable of swinging in the left-right direction. The counterweight 6 is provided on the rear side of the revolving frame 5 and the weight balance to the working mechanism 4 is maintained by the counterweight 6. The counterweight 6 rises upward from the revolving frame 5 in such a manner as to cover the engine 8 from backward and a lower part of the counterweight 6 is formed as an extension part 6A that extends backward from the revolving frame 5. An inspection opening (not shown) is formed closer to the upper side than the extension part 6A of the counterweight 6 to inspect the engine 8 and the like, and the inspection opening is covered by an engine cover 7 in an openable/closable manner.

The engine 8 as the prime mover is mounted on the revolving frame 5 to be positioned in front of the counterweight 6. The engine 8 is mounted on the revolving frame 5 in a transverse state where a crank shaft (not shown) extends in the left-right direction. A suction type cooling fan 8A is provided on the right side of the engine 8 and the cooling fan 8A is driven and rotated by the engine 8 to generate cooling air, which is supplied to an after-mentioned heat exchanger 21. The hydraulic pump 9 is provided on the left side of the engine 8. The hydraulic pump 9 is driven by the engine 8 to suck in operating oil for pressurization, and this operating oil (pressurized oil) is supplied to various hydraulic actuators mounted on the hydraulic excavator 1. It should be noted that an electric motor or a hybrid prime mover composed of a combination of an engine and an electric motor may be used as the prime mover.

The cab 10 is mounted on the revolving frame 5 to be positioned in front of the counterweight 6. The cab 10 is surrounded by a front surface 10A, a rear surface 10B, a left side surface 10C, a right side surface 10D and an upper surface 10E to define an operator's room. An operator's seat 11, a traveling lever pedal device (not shown), a control lever device 12, an after-mentioned air conditioner unit 24 and the like are arranged inside the cab 10.

The left exterior cover 13 is located on the left side of the revolving frame 5. The left exterior cover 13 rises upward from a rear left side of the revolving frame 5 and extends from a left end part of the counterweight 6 toward the left side surface 10C of the cab 10. The left exterior cover 13 is removably attached to a support member (not shown) by using bolts or the like and covers the hydraulic pump 9 and the like from left lateral.

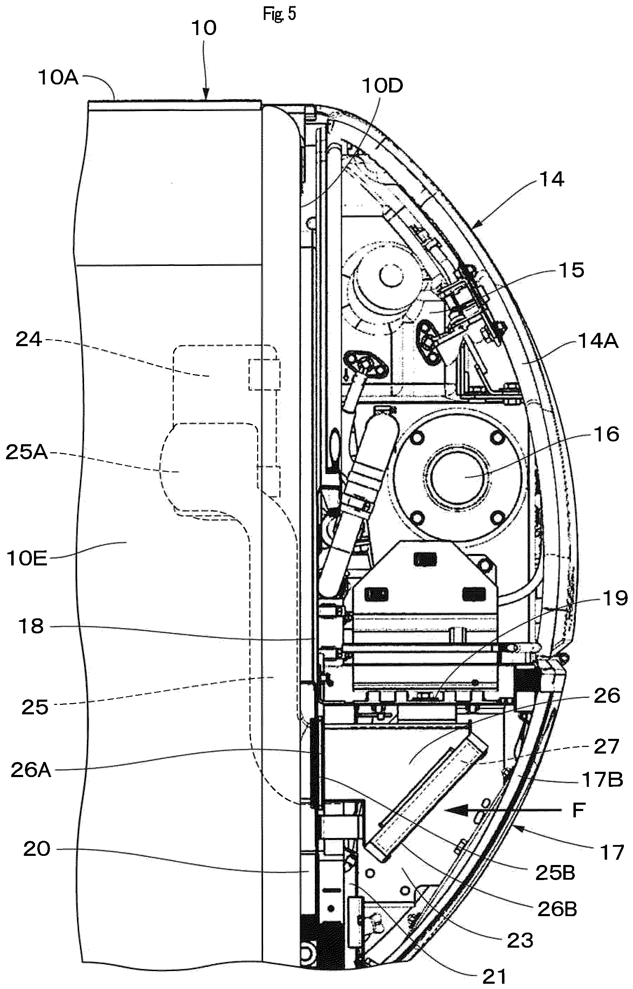

The right front exterior cover 14 is located on a right front side of the revolving frame 5. The right front exterior cover 14 rises upward from a front right side of the revolving frame 5 and extends from a front end part of the after-mentioned right rear exterior cover 17 toward a right front corner part (a corner part where the front surface 10A intersects with the right side surface 10D) of the cab 10. The right front exterior cover 14 is provided with a right front side cover 14A rising upward from the revolving frame 5 and a right front upper cover 14B for closing an upper end of the right front side cover 14A. The right front side cover 14A is removably attached to a support member (not shown) by using bolts or the like and covers a fuel tank 15, an operating oil tank 16 and the like from right lateral (refer to Fig. 5). A rear end part of the right front upper cover 14B is attached through a hinge mechanism to a support member (neither of them is shown) and a front side of the right front upper cover 14B rotates in the upper-lower direction around a hinge mechanism. Because of this configuration, the right front upper cover 14B closes the upper end of the right front side cover 14A in an openable/closable manner to cover the fuel tank 15, the operating oil tank 16 and the like from upward.

The right rear exterior cover 17 is located on a right rear side of the revolving frame 5 to be adjacent to the rear side of the right front exterior cover 14. The right rear exterior cover 17 rises upward from a rear right side of the revolving frame 5 and extends from a right end part of the counterweight 6 toward the right front exterior cover 14. The right rear exterior cover 17 is provided with a right rear side cover 17A rising upward from the revolving frame 5 and a right rear upper cover 17B for closing an upper end of the right rear side cover 17A. A front end part of the right rear side cover 17A is attached through a hinge mechanism to a support member (neither of them is shown) and a rear side of the right rear side cover 17A rotates in the front-back direction around the hinge mechanism. Because of this configuration, the right rear side cover 17A covers an after-mentioned heat exchanger chamber 23 from right lateral in an openable/closable manner. The right rear upper cover 17B is removably attached to a support member (not shown) by using bolts or the like and covers the heat exchanger chamber 23 from upward. In this way, the right rear exterior cover 17 covers the cooling fan 8A and the heat exchanger 21 to form the heat exchanger chamber 23.

A plurality of (for example, three) vents 17C, 17D, 17E are provided on the right rear side cover 17A in the right rear exterior cover 17 to line up in the upper-lower direction. The vents 17C, 17D, 17E causes communication between the heat exchanger chamber 23 and the outside to be made. The cooling air (outside air) generated by rotation of the cooling fan 8A flows via the vents 17C, 17D, 17E into the heat exchanger chamber 23.

An inner cover 18 is provided between the fuel tank 15 and the operating oil tank 16, and the cab 10. The inner cover 18 is formed by a flat-shaped member extending in the upper-lower direction and in the front-back direction and partitions between the cab 10 and the outside. In addition, the inner cover 18 serves also as a bracket for attaching the air conditioner unit 24 and an outside air introducing duct 25 which will be described later, and the like.

A partition member 19 is provided on the rear side of the operating oil tank 16. The partition member 19 is formed by a flat-shaped member extending in the upper-lower direction and in the front-back direction and partitions between the operating oil tank 16 and the heat exchanger chamber 23. A heat exchanger bracket 20 is provided between an upper end side of the inner cover 18 and the counterweight 6 to extend in the front-back direction. The heat exchanger 21 is provided between the heat exchanger bracket 20 and the revolving frame 5.

The heat exchanger 21 is provided on the right side of the engine 8 in a state of facing the cooling fan 8A in the left-right direction. The heat exchanger 21 is provided with, for example, a radiator 21A for cooling engine cooling water and an oil cooler 21B for cooling operating oil. The radiator 21A and the oil cooler 21B are attached between the revolving frame 5 and the heat exchanger bracket 20 to be adjacent in the front-back direction. The radiator 21A and the oil cooler 21B are arranged in parallel with a flowing direction of the cooling air to be supplied by the cooling fan 8A. In addition, the heat exchanger bracket 20 and the heat exchanger 21 serve as partitions between an engine room 22 and the heat exchanger chamber 23.

The engine room 22 is provided on the rear side of the upper revolving structure 3. The engine room 22 is formed as a space surrounded by the revolving frame 5, the counterweight 6, the engine cover 7, the cab 10, the left exterior cover 13, the heat exchanger bracket 20, the heat exchanger 21 and the like. The engine 8, the hydraulic pump 9 and the like are accommodated in the engine room 22.

The heat exchanger chamber 23 is provided on the right rear side of the upper revolving structure 3. The heat exchanger chamber 23 is formed as a space surrounded by the revolving frame 5, the right rear exterior cover 17, the partition member 19, the heat exchanger bracket 20, the heat exchanger 21 and the like. The heat exchanger 21, a filter box 26 and a dust protective filter 27 which will be described later, and the like are accommodated in the heat exchanger chamber 23. The heat exchanger chamber 23 forms a space isolated from the outside in a state where the right rear exterior cover 17 (right rear side cover 17A) is closed. In addition, when the cooling fan 8A is rotated by the engine 8, the cooling air (outside air) flows through the vents 17C, 17D, 17E in the right rear exterior cover 17 into the heat exchanger chamber 23 as shown by an arrow F in Fig. 5. The cooling air cools the heat exchanger 21 (the radiator 21A and the oil cooler 21B) and is thereafter introduced into the engine room 22 to cool the engine 8 and the hydraulic pump 9 from the outside.

The air conditioner unit 24 is provided inside the cab 10. The air conditioner unit 24 is located closer to the right side surface 10D of the cab 10 in a state of being attached to the inner cover 18 or the like. A fan, an evaporator and the like (none of them is shown) are provided inside the air conditioner unit 24. The air conditioner unit 24 selectively sucks in air (inside air) inside the cab 10 and air (outside air) outside the cab 10, which is supplied as the conditioned air to the cab 10 to adjust the inside of the cab 10 to an operator-favored temperature environment.

The outside air introducing duct 25 is connected to the air conditioner unit 24 to introduce air outside the cab 10 (outside air) to the air conditioner unit 24. The outside air introducing duct 25 is composed of a cylindrical body extending in the front-back direction and is attached to the inner cover 18 and the like. A front end of the outside air introducing duct 25 is formed as a connection port 25A that is connected to the air conditioner unit 24. The outside air introducing duct 25 is inclined obliquely upward from the air conditioner unit 24 and extends backward. A rear end side of the outside air introducing duct 25 bends toward the heat exchanger chamber 23 and is supported by the inner cover 18, for example. In addition, a rear end of the outside air introducing duct 25 is formed as an outside air inlet port 25B that opens into the heat exchanger chamber 23. The outside air inlet port 25B of the outside air introducing duct 25 opens toward the upstream side of flow F of the cooling air flowing into the heat exchanger chamber 23 (refer to Fig. 5).

The filter box 26 is located inside the heat exchanger chamber 23 in a state of being connected to the outside air inlet port 25B of the outside air introducing duct 25. The filter box 26 is provided with a connection port 26A connected to the outside air inlet port 25B of the outside air introducing duct 25 and a suction port 26B projecting into the heat exchanger chamber 23 to be formed in a boxy shape. The suction port 26B of the filter box 26 faces the right rear exterior cover 17 (right rear side cover 17A). As a result, based upon the operating of the air conditioner unit 24, part of the air flowing into the heat exchanger chamber 23 from the vents 17C, 17D, 17E in the right rear exterior cover 17 is supplied from the suction port 26B of the filter box 26 located inside the heat exchanger chamber 23 through the outside air introducing duct 25 to the air conditioner unit 24.

The dust protective filter 27 is removably attached to the suction port 26B of the filter box 26. The dust protective filter 27 traps dust and the like present in the outside air to be introduced to the suction port 26B of the filter box 26, consequently supplying the purified outside air through the outside air introducing duct 25 to the air conditioner unit 24.

Here, a large amount of outside air (cooling air) flows into the heat exchanger chamber 23 by the rotation of the cooling fan 8A. Part of the cooling air is introduced to the outside air inlet port 25B of the outside air introducing duct 25 that is open to the heat exchanger chamber 23 and the outside air is efficiently supplied through the outside air introducing duct 25 to the air conditioner unit 24. In this case, a suction amount of outside air by the air conditioner unit 24 is smaller than a flow amount of cooling air (outside air) to be supplied to the heat exchanger 21 by the cooling fan 8A. Therefore, even when the powder dust is mixed into the outside air flowing into the heat exchanger chamber 23, the intrusion of the powder dust into the outside air introducing duct 25 is suppressed.

Further, the outside air inlet port 25B of the outside air introducing duct 25 opens into the heat exchanger chamber 23 isolated from the outside in a state where the right rear exterior cover 17 is closed. Therefore, even when a great number of powder dust is scattered around the hydraulic excavator 1 at the excavating work, an amount of the powder dust to be intruded into the heat exchanger chamber 23 is suppressed. As a result, an amount of the powder dust to be introduced through the outside air introducing duct 25 to the air conditioner unit 24 is reduced, making it possible to suppress the clogging of the dust protective filter 27 attached to the suction port 26B of the filter box 26.

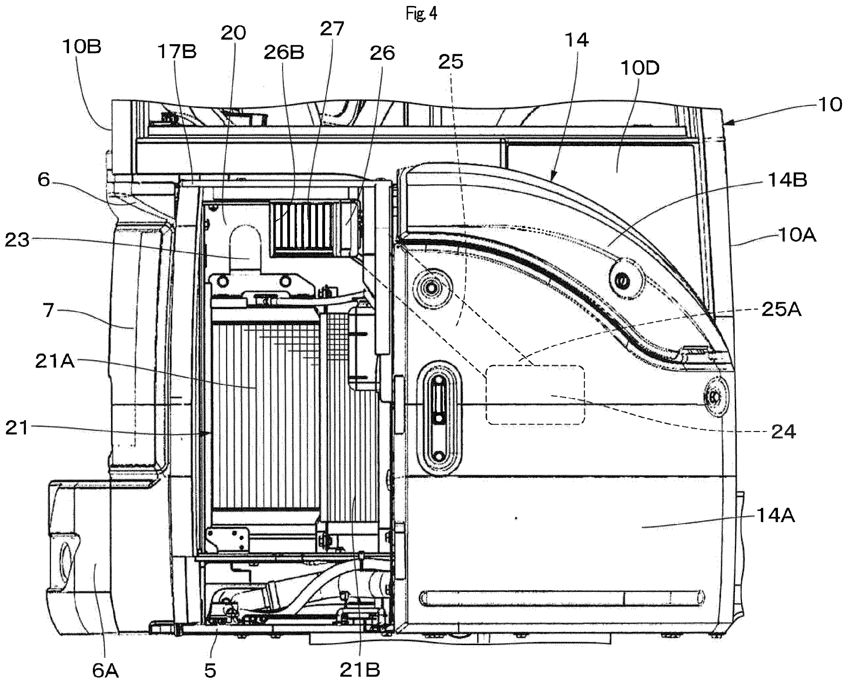

In addition, as shown in Fig. 4, the outside air inlet port 25B of the outside air introducing duct 25 to which the filter box 26 is attached is located above the heat exchanger 21 inside the heat exchanger chamber 23. Therefore, the cooling air supplied through the vents 17C, 17D, 17E in the right rear exterior cover 17 to the heat exchanger 21 can be suppressed from directly flowing into the outside air introducing duct 25. Because of this configuration, the powder dust mixed into the cooling air can be suppressed from flowing through the outside air introducing duct 25 into the air conditioner unit 24. Moreover, in a case of heating the inside of the cab 10 by the air conditioner unit 24, since the heated air retained above the heat exchanger 21 is introduced through the outside air introducing duct 25 to the air conditioner unit 24, the inside of the cab 10 can be heated efficiently.

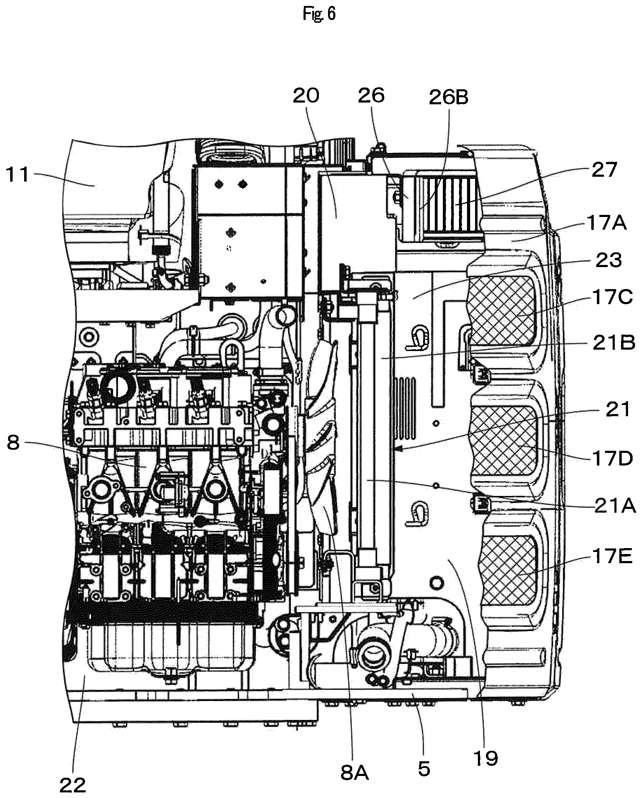

Further, as shown in Fig. 6, the three vents 17C, 17D, 17E are arranged in the right rear exterior cover 17 that covers the heat exchanger chamber 23 in an openable/closable manner to line up in the upper-lower direction. The outside air inlet port 25B of the outside air introducing duct 25 to which the filter box 26 is attached is located closer to the upper side than the vent 17C, which is located in the highest position, of the three vents 17C, 17D, 17E. As a result, even when the powder dust is mixed into the cooling air flowing through the vents 17C, 17D, 17E into the heat exchanger chamber 23 by the rotation of the cooling fan 8A, the powder dust can be suppressed from intruding through the outside air inlet port 25B into the outside air introducing duct 25.

The hydraulic excavator 1 according to the present embodiment has the configuration as described above. In a case of performing an excavating work by using the hydraulic excavator 1, for example, an operator sits on the operator's seat 11 in the cab 10 and operates the traveling lever pedal device (not shown) to cause the hydraulic excavator 1 to travel to the working site. In addition, the operator operates the control lever device 12 in the working site, thus performing the excavating work of earth and sand, and the like by the working mechanism 4 while revolving the upper revolving structure 3.

At the working of the hydraulic excavator 1, the cooling fan 8A is rotated by the engine 8 and a large amount of outside air flows through the vents 17C, 17D, 17E in the right rear exterior cover 17 into the heat exchanger chamber 23. The outside air is supplied to the radiator 21A and the oil cooler 21B of the heat exchanger 21 as the cooling air, thus making it possible to cool the engine cooling water and the operating oil.

On the other hand, at the working of the hydraulic excavator 1, for improving the residential environment inside the cab 10, the air conditioner unit 24 is operated to supply the conditioned air to the cab 10. In this case, when the air conditioner unit 24 is switched to the outside air side, the air (outside air) in the heat exchanger chamber 23 flows from the filter box 26 through the outside air introducing duct 25 into the air conditioner unit 24. Because of this, the air conditioner unit 24 supplies the conditioned air a temperature of which is adjusted to a desired one into the cab 10.

Here, in the hydraulic excavator 1 according to the present embodiment, the outside air inlet port 25B of the outside air introducing duct 25 opens toward the upstream side of flow F of the cooling air inside the heat exchanger chamber 23 into which the cooling air flows. Since a large amount of cooling air flows into the heat exchanger chamber 23 by the rotation of the cooling fan 8A, part of the cooling air is introduced to the outside air inlet port 25B located inside the heat exchanger chamber 23. Therefore, the outside air can efficiently be introduced through the outside air introducing duct 25 to the air conditioner unit 24.

In addition, a suction amount of the outside air by the air conditioner unit 24 is smaller than a flow amount of the cooling air to be supplied to the heat exchanger 21 by the cooling fan 8A. Therefore, even when the powder dust is scattered around the hydraulic excavator 1 at the excavating work to be mixed into the outside air flowing into the heat exchanger chamber 23, a large measure of the powder dust flows to the heat exchanger 21. Therefore, the intrusion of the powder dust through the outside air introducing duct 25 into the air conditioner unit 24 can be suppressed.

In addition, the outside air inlet port 25B of the outside air introducing duct 25 opens into the heat exchanger chamber 23 isolated from the outside in a state where the right rear exterior cover 17 is closed. Therefore, even in a case where a great number of powder dust is scattered around the hydraulic excavator 1, an amount of the powder dust to be intruded into the heat exchanger chamber 23 can be suppressed. As a result, an amount of the powder dust in the outside air introduced through the outside air introducing duct 25 to the air conditioner unit 24 can moreover be reduced, and supply the purified outside air to the air conditioner unit 24.

The dust protective filter 27 is attached through the filter box 26 to the outside air inlet port 25B of the outside air introducing duct 25 inside the heat exchanger chamber 23. Therefore, the powder dust mixed into the outside air introduced to the outside air inlet port 25B can certainly be trapped by the dust protective filter 27. Moreover, since the powder dust to be intruded into the heat exchanger chamber 23 is reduced, the clogging of the dust protective filter 27 can be suppressed, extending a life span of the dust protective filter 27.

In addition, the outside air inlet port 25B of the outside air introducing duct 25 to which the filter box 26 is attached is located above the heat exchanger 21 inside the heat exchanger chamber 23. Therefore, the cooling air supplied through the vents 17C, 17D, 17E in the right rear exterior cover 17 to the heat exchanger 21 can be suppressed from directly flowing into the outside air introducing duct 25. As a result, the powder dust mixed into the cooling air can be suppressed from flowing through the outside air introducing duct 25 into the air conditioner unit 24. Moreover, in a case of heating the inside of the cab 10 by the air conditioner unit 24, the heated air retained above the heat exchanger 21 can be introduced through the outside air introducing duct 25 to the air conditioner unit 24. As a result, the inside of the cab 10 can be heated efficiently.

In addition, the outside air inlet port 25B of the outside air introducing duct 25 to which the filter box 26 is attached is located closer to the upper side than the vent 17C, which is located in the highest side, of the three vents 17C, 17D, 17E provided in the right rear exterior cover 17 that covers the heat exchanger chamber 23 in an openable/closable manner. As a result, even when the powder dust is mixed into the cooling air flowing through the vents 17C, 17D, 17E into the heat exchanger chamber 23 by the rotation of the cooling fan 8A, the powder dust can be suppressed from intruding through the outside air inlet port 25B into the outside air introducing duct 25.

In this way, the hydraulic excavator 1 according to the embodiment comprises: the cooling fan 8A that generates the cooling air; the heat exchanger 21 that cools the fluid by the cooling air supplied from the cooling fan 8A; the right rear exterior cover 17 that covers the cooling fan 8A and the heat exchanger 21 to form the heat exchanger chamber 23 and is provided with the vents 17C, 17D, 17E through which the cooling air is communicated with the vehicle body outside; the cab 10 that forms the operator's room; the air conditioner unit 24 that supplies the conditioned air into the cab 10; and the outside air introducing duct 25 that is provided with the outside air inlet port 25B and introduces the outside air taken in from the outside air inlet port 25B to the air conditioner unit 24, characterized in that: the outside air inlet port 25B is provided inside the heat exchanger chamber 23 and is located to open toward the upstream side of the flow of the cooling air.

According to this configuration, in the heat exchanger chamber 23 into which a large amount of cooling air flows by the cooling fan 8A, part of the cooling air is introduced to the outside air inlet port 25B, thereby making it possible to supply the outside air through the outside air introducing duct 25 to the air conditioner unit 24 efficiently. In this case, a suction amount of the outside air by the air conditioner unit 24 is smaller than a flow amount of the cooling air to be supplied to the heat exchanger 21 by the cooling fan 8A. Therefore, even when the powder dust scattered around the hydraulic excavator 1 is mixed into the outside air, since a large measure of the powder dust flows to the heat exchanger 21, the powder dust can be suppressed from intruding through the outside air introducing duct 25 into the air conditioner unit 24.

In the embodiment, the air conditioner unit 24 is provided inside the cab 10 and the outside air inlet port 25B of the outside air introducing duct 25 is located above the heat exchanger 21 inside the heat exchanger chamber 23. According to this configuration, in a case of heating the inside of the cab 10 by the air conditioner unit 24, since the heated air retained above the heat exchanger 21 inside the heat exchanger chamber 23 in which the heat exchanger 21 to be raised to high temperature is located can be introduced through the outside air introducing duct 25 to the air conditioner unit 24, the inside of the cab 10 can be heated efficiently.

In the embodiment, the dust protective filter 27 is attached to the outside air inlet port 25B of the outside air introducing duct 25 and is located closer to the upper side than the upper end of the vents 17C, 17D, 17E provided on the right rear exterior cover 17. According to this configuration, since powder dust or foreign objects mixed into the cooling air are trapped by the dust protective filter 27, the powder dust and foreign objects can be suppressed from intruding through the outside air inlet port 25B into the outside air introducing duct 25. In addition, the outside air inlet port 25B is provided closer to the upward side than a flowing passage of the cooling air between the cooling fan 8A and the vents 17C, 17D, 17E. Therefore, the cooling air that flows through the vents 17C, 17D, 17E into the heat exchanger chamber 23 by the rotation of the cooling fan 8A and flows toward the heat exchanger 21 is suppressed from directly flowing into the outside air inlet port 25B. That is, even when the powder dust or the foreign objects are mixed into the cooling air, the powder dust or the foreign objects trapped by the dust protective filter 27 are made relatively smaller as compared to a case where the outside air inlet port 25B is provided inside the flowing passage of the cooling air between the cooling fan 8A and the vents 17C, 17D, 17E or to a case where the outside air inlet port 25B is provided in the downstream side of the flowing passage of the cooling air in which the powder dust or the foreign objects tend to be easily retained. As a result, the clogging of the dust protective filter 27 is suppressed, making it possible to extend a period in which replacement of the dust protective filter 27 is required.

It should be noted that the embodiment shows as an example a case where the filter box 26 is attached to the outside air inlet port 25B of the outside air introducing duct 25 and the dust protective filter 27 is attached to the suction port 26B of the filter box 26. However, the present invention is not limited thereto but, for example, without using the filter box 26, a dust protective filter may directly be attached to the outside air inlet port 25B of the outside air introducing duct 25.

In addition, the embodiment shows as an example a case of the compact hydraulic excavator 1 provided with the lower traveling structure 2 of a crawler type as the construction machine. However, the present invention is not limited thereto but may be applied widely to construction machines such as hydraulic excavators of a standard specification, wheel type hydraulic excavators, hydraulic cranes and the like.

### DESCRIPTION OF REFERENCE NUMERALS

1: HYDRAULIC EXCAVATOR (CONSTRUCTION MACHINE)
2: LOWER TRAVELING STRUCTURE (VEHICLE BODY)
3: UPPER REVOLVING STRUCTURE (VEHICLE BODY)
4: WORKING MECHANISM
8A: COOLING FAN
10: CAB
21: HEAT EXCHANGER
23: HEAT EXCHANGER CHAMBER
24: AIR CONDITIONER UNIT
25: OUTSIDE AIR INTRODUCING DUCT (DUCT)
25B: OUTSIDE AIR INLET PORT
17: RIGHT REAR EXTERIOR COVER (EXTERIOR COVER)
17C, 17D, 17E: VENT
27: DUST PROTECTIVE FILTER

## Claims

1. A construction machine comprising:
a cooling fan that generates cooling air;
a heat exchanger that cools fluid by the cooling air supplied from the cooling fan;
an exterior cover that covers the cooling fan and the heat exchanger to form a heat exchanger chamber and is provided with a vent through which the cooling air is communicated with a vehicle body outside;
a cab that forms an operator's room;
an air conditioner unit that supplies conditioned air into the cab; and
a duct that is provided with an outside air inlet port and introduces outside air taken in from the outside air inlet port to the air conditioner unit, **characterized in that**:
the outside air inlet port is provided inside the heat exchanger chamber and is located to open toward an upstream side of the flow of the cooling air.

2. The construction machine according to claim 1, wherein:
the air conditioner unit is provided inside the cab; and
the outside air inlet port of the duct is located above the heat exchanger inside the heat exchanger chamber.

3. The construction machine according to claim 1, further comprising:
a dust protective filter attached to the outside air inlet port of the duct, wherein the dust protective filter is located closer to the upper side than an upper end of the vent provided on the exterior cover.
